# EUROPEAN PATENT SPECIFICATION

(11) **EP 2 666 631 B1**
(45) Date of publication and mention of the grant of the patent: **06.05.2020**
(21) Application number: 12736803.3
(22) Date of filing: 10.01.2012
(51) Int. Cl.: B32B 27/32, B65D 65/40, B32B 7/00, B32B 7/02, B32B 27/00, B32B 27/06, B32B 27/18, B32B 27/28, B32B 27/30, B32B 27/36, C08L 23/10, B32B 27/08

(54) **STRETCH PACKAGING FILM**
DEHNBARE VERPACKUNGSFOLIE
FILM D'EMBALLAGE ÉTIRABLE

(30) Priority: 22.01.2011 JP 2011011473
(43) Date of publication of application: 27.11.2013
(73) Proprietor: Mitsubishi Chemical Corporation, Tokyo (JP)
(72) Inventor: SUZUKI, Maiko, Nagahama-shi Shiga 526-0023 (JP); KITADA, Satoshi, Nagahama-shi Shiga 526-0243 (JP); NEMOTO, Tomoyuki, Nagahama-shi Shiga 526-0023 (JP); KOBAYASHI, Noriyuki, Nagahama-shi Shiga 526-0243 (JP); TANIGUCHI, Kouichirou, Nagahama-shi Shiga 526-0023 (JP)
(74) Representative: Ter Meer Steinmeister & Partner
(86) International application number: PCT/JP2012/050250
(87) International publication number: WO 2012/098947

(56) References cited:
- EP-A1- 1 552 921
- EP-A1- 2 226 357
- WO-A1-2011/024562
- JP-A- H05 147 174
- JP-A- 2000 044 696
- JP-A- 2000 063 597
- JP-A- 2001 150 614
- JP-A- 2001 150 614
- JP-A- 2006 521 457
- JP-A- 2007 030 445
- JP-A- 2007 216 551
- US-A- 5 296 304

## Description

### TECHNICAL FIELD

The present invention relates to a stretch packaging film, and more particularly, to a stretch packaging film suitably used for food packaging, in particular, a stretch packaging film containing no chlorine nor plasticizer for polyvinyl chloride.

### BACKGROUND ART

Heretofore, polyvinyl chloride-based films have been mainly used as stretch packaging films for so-called prepackaging to overwrap fruits, meats or prepared food which are placed on lightweight trays. Such polyvinyl chloride-based films have a good packaging suitability such as high packaging efficiency and neat packaging finish, but also an excellent elastic recovery property capable of regaining an initial shape thereof even when deformed owing to pressing by a finger after packaging, a good bottom overwrapping property, a less occurrence of peeling during transportation or display or the like. Thus, the polyvinyl chloride-based films have such a superiority in product quality admitted by both distributors and consumers that the resulting products are free from deterioration in commercial value thereof. However, in recent years, the polyvinyl chloride-based films have posed significant problems such as generation of a hydrogen chloride gas during incineration thereof and elution of a plasticizer contained in a large amount therein.

For these reasons, various studies have been made on alternate materials to be substituted for the polyvinyl chloride-based films. In particular, stretch packaging films of various types employing polyolefin-based resins have been proposed. Among them, studies have been actively made on a stretch packaging film having a two kind/three layer structure which includes front and rear surface layers formed of an ethylene-vinyl acetate copolymer as a main component thereof and an intermediate layer formed of various polypropylene-based resins as a main component thereof because of good surface properties as well as transparency, adequate heat resistance, flexibility for design of materials, economical efficiency, etc., which are required for a stretch film.

For example, there has been proposed a stretch film for food packaging which includes at least one layer comprising a material selected from the group consisting of a propylene-based polymer having a heat of crystallization of 10 to 60 J/g, a petroleum resin, a terpene resin, a chroman-indene resin, a rosin resin and hydrogenated derivatives of these resins, and has a specific storage elastic modulus (Patent Document 1).

In the case where a stretch packaging film is loaded to an automatic packaging machine for packaging desired articles, the packaging may be sometimes carried out while varying a stretching degree of the stretch packaging film having a given width according to a size of a tray used for the packaging. At this time, in order to package a large tray, the stretching degree of the stretch packaging film upon overwrapping is increased (high stretch packaging). The stretch packaging film proposed in the above Patent Document 1 is a novel polyolefin-based stretch packaging film as a non-chlorine-based stretch packaging film which comprises no chlorine nor plasticizer for polyvinyl chloride. The above stretch packaging film exhibits various good properties as a suitability for use in an automatic packaging machine (such as a cutting property, a resistance to occurrence of wrinkles upon packaging, a bottom overwrapping stability and a tearing property), but tends to pose such a problem that the film suffers from occurrence of whitening after packaging when subjected to the high stretch packaging.

Patent document 2 also discloses a laminated film for stretch packaging.

### PRIOR ARTS:

### Patent Documents

Patent Document 1: Japanese Patent Application Laid-Open (KOKAI) No. 9-154479
Patent Document 2: EP 1 552 921 A

### SUMMARY OF THE INVENTION

### Problems to be Solved by the Invention

The present invention is defined in the appended claims and has been accomplished to solve the above problems of the conventional art. An object of the present invention is to provide a novel non-chlorine-based stretch packaging film which is produced using a specific soft polypropylene-based resin as a main component, exhibits various good properties as a suitability for use in an automatic packaging machine (such as a cutting property, a resistance to occurrence of wrinkles upon packaging, a bottom overwrapping stability and a tearing property), and hardly suffers from occurrence of whitening even after subjected to the above high stretch packaging for overwrapping.

### Means for Solving Problems

As a result of the present inventors' earnest study in view of the above problems, it has been found that the above problem can be readily solved by a film having a specific structure. The present invention has been attained on the basis of this finding.

That is, in an aspect of the present invention, there is provided a stretch packaging film comprising a laminated film having at least three layers,
which laminated film comprises opposite surface layers each comprising an ethylene-based resin (A) as a main component, and an intermediate layer comprising as main components a propylene-based resin (B) which satisfies the following conditions (1) and (2), and a propylene-based resin (C) which satisfies the following condition (3), wherein the intermediate layer further comprises an ethylene-based resin (E) in an amount of 1 to 40 % by mass, and has a heat of crystallization (ΔHc) of 10 to 60 J/g as measured at a temperature drop rate of 10°C/min using a differential scanning calorimeter (DSC) and
which laminated film has a storage elastic modulus (E') at 20°C of 100 MPa to 1 GPa as measured with respect to the laminated film at an oscillation frequency of 10 Hz and a distortion of 0.1% by a dynamic viscoelasticity measuring method:
Condition (1): that a single peak is observed in a crystallization curve of the propylene-based resin (B) as measured at a temperature drop rate of 10°C/min using a differential scanning calorimeter (DSC);
Condition (2): that a crystallization peak temperature (Tc) and a heat of crystallization (ΔHc) of the propylene-based resin (B) as observed in the crystallization curve defined in the above (1) are not lower than 70°C and not more than 10 J/g, respectively; and
Condition (3): that a heat of crystallization (ΔHc) of the propylene-based resin (C) as measured at a temperature drop rate of 10°C/min using a differential scanning calorimeter (DSC) is larger than the heat of crystallization (ΔHc) of the propylene-based resin (B).

### EFFECT OF THE INVENTION

In accordance with the present invention, there is provided a non-chlorine-based stretch packaging film which exhibits various good properties as a suitability for use in an automatic packaging machine (such as a cutting property, a resistance to occurrence of wrinkles upon packaging, a bottom overwrapping stability and a tearing property), and hardly suffers from occurrence of whitening even after subjected to high stretch packaging for overwrapping.

### PREFERRED EMBODIMENTS FOR CARRYING OUT THE INVENTION

In the following, the stretch packaging film as an example of the preferred embodiment of the present invention is explained. However, it should be noted that the following embodiment is only illustrative and not intended to limit the present invention thereto.

In the film of the present invention, by forming surface layers each comprising an ethylene-based resin (A) as a main component to provide a laminated structure, it is possible to enhance a heat sealing property (bottom sealing property) of the film, in particular, under a low-temperature condition, as well as a self-adhering property and an inflation moldability thereof.

Examples of the ethylene-based resin (A) include low-density polyethylene, linear low-density polyethylene, linear ultra-low-density polyethylene, medium-density polyethylene, high-density polyethylene, and copolymers comprising ethylene as a main component. Specific examples of the copolymers comprising ethylene as a main component include copolymers or multi-component copolymers of ethylene with at least one comonomer selected from the group consisting of α-olefins having 3 to 10 carbon atoms such as propylene, butene-1, pentene-1, hexene-1, 4-methyl pentene-1, heptene-1 and octene-1; vinyl esters such as vinyl acetate and vinyl propionate; unsaturated carboxylic acid esters such as methyl acrylate, ethyl acrylate, methyl methacrylate and ethyl methacrylate and ionomers thereof; and unsaturated compounds such as conjugated dienes and non-conjugated dienes. The ethylene-based resin (A) may also be in the form of a mixed composition of these compounds, or the like. The content of an ethylene unit in the ethylene-based polymer is usually more than 50% by mass.

Among the above compounds as the ethylene-based resin (A), preferred is at least one ethylene-based polymer selected from the group consisting of low-density polyethylene, linear low-density polyethylene, linear ultra-low-density polyethylene, an ethylene-vinyl acetate copolymer (EVA), an ethylene-acrylic ester copolymer and an ethylene-methacrylic ester copolymer.

Meanwhile, specific examples of the acrylic ester in the above ethylene-acrylic ester copolymer include methyl acrylate and ethyl acrylate. Specific examples of the methacrylic ester in the above ethylene-methacrylic ester copolymer include methyl methacrylate and ethyl methacrylate.

Among the above compounds, the more preferred ethylene-based resin (A) is an ethylene-vinyl acetate copolymer having a vinyl acetate unit content of 5 to 25% by mass and an MFR (melt flow rate) of 0.2 to 10 g/10 min (as measured at 190°C under a load of 21.18 N according to JIS K 7210). The MFR of the ethylene-vinyl acetate copolymer is preferably 0.5 to 8 g/10 min and more preferably 1 to 6 g/10 min. When the vinyl acetate unit content in the ethylene-vinyl acetate copolymer is not less than 5% by mass, the resulting film is soft, and not only can maintain a flexibility and an elastic recovery property, but also can impart a good adhesion property to a surface of the film. On the other hand, when the vinyl acetate unit content in the ethylene-vinyl acetate copolymer is not more than 25% by mass, the resulting film can be prevented from exhibiting an excessively high surface adhesion property, and therefore can maintain a good winding property and a good appearance. In addition, when the MFR of the ethylene-vinyl acetate copolymer is not less than 0.2 g/10 min, the resulting resin composition can maintain a good extrusion moldability. On the other hand, when the MFR of the ethylene-vinyl acetate copolymer is not more than 10 g/10 min, the resulting resin composition can maintain a good film-forming stability, so that it is possible to suppress unevenness in thickness and variation in mechanical strength of the resulting film, etc.

The intermediate layer is a layer comprising a specific propylene-based resin (B) and a specific propylene-based resin (C) as main components.

The propylene-based resin (B) used in the film of the present invention has a single peak in a crystallization curve thereof as measured at a temperature drop rate of 10°C/min using a differential scanning calorimeter (DSC), and exhibits a crystallization peak temperature (Tc) of not lower than 70°C and a heat of crystallization (ΔHc) of not more than 10 J/g as observed in the crystallization curve.

In general, in the case of propylene-based resins, there is such a tendency that the smaller the heat of crystallization (ΔHc) becomes, the lower the peak temperature (Tc) is.

Under such a condition that the crystallization peak temperature (Tc) of the polypropylene-based resin (B) as observed in the above crystallization curve is not lower than 70°C, for example, when mixing the polypropylene-based resin (B) with the other polypropylene-based resin, the resulting resin composition can be enhanced in compatibility between these resin components, so that it is possible to obtain a film that hardly suffers from occurrence of whitening even after being subjected to high stretch packaging.

From these viewpoints, the crystallization single peak temperature of the propylene-based copolymer (B) as measured using a differential scanning calorimeter (DSC) is not lower than 70°C and more preferably not lower than 80°C. The upper limit of the crystallization single peak temperature is not particularly limited, and is practically not higher than 150°C.

Next, the case where the peak observed in the crystallization curve of the propylene-based resin (B) used in the present invention as measured at a temperature drop rate of 10°C/min using a differential scanning calorimeter (DSC) is not single, more specifically, the case where double peaks are observed in the crystallization curve of the propylene-based resin (B), is explained. When double peaks are observed in the crystallization curve of the propylene-based resin (B), the resin tends to comprise regions that are different in crystallization rate from each other, namely, the resin tends to be correspondingly kept in a non-uniform state. As a result, there tend to arise the problems such as deteriorated transparency of the resin, stickiness of raw material pellets and occurrence of blocking of the resulting film during storage thereof. For this reason, the resin tends to be unsuitable for production of the film according to the present invention.

In addition, when the propylene-based resin (B) has a heat of crystallization (ΔHc) of not more than 10 J/g as measured at a temperature drop rate of 10°C/min using a differential scanning calorimeter (DSC), the resulting film can readily ensure a good flexibility and a good suitability for packaging machines which is required for a stretch packaging film (such as a cutting property, a resistance to occurrence of wrinkles upon packaging, a bottom overwrapping stability and a tearing property). The lower limit of the heat of crystallization (ΔHc) of the propylene-based resin (B) is not particularly limited, and is preferably not less than 1 J/g in view of an anti-blocking property of the resulting film. Therefore, the heat of crystallization (ΔHc) of the propylene-based resin (B) is preferably 1 to 10 J/g, more preferably 2 to 10 J/g and especially preferably 3 to 9 J/g.

As the method of well controlling the heat of crystallization (ΔHc) and the crystallization peak temperature (Tc) of the propylene-based copolymer (B) to the above-specified ranges, there may be suitably used a method of reducing a stereo regularity of the resin, or the like. As the propylene-based resin (B), there may be suitably used a propylene-ethylene copolymer or a propylene-α-olefin copolymer.

As the α-olefin, there may be usually mentioned those α-olefins having 4 to 20 carbon atoms. Specific examples of the α-olefins having 4 to 20 carbon atoms include 1-butene, 1-pentene, 1-hexene, 1-heptene, 1-octene, 1-nonene and 1-decene. These α-olefins to be copolymerized with propylene may be used alone or in combination of any two or more thereof. In the present invention, owing to relatively easy control of the above properties and industrial availability with relatively low costs, etc., among these resins, the propylene-ethylene copolymer is preferably selected.

From the above viewpoints, the content of the α-olefin, in particular, ethylene, in the propylene-α-olefin copolymer is usually not less than 1% by mass and preferably not less than 3% by mass. The upper limit of the content of the α-olefin in the propylene-α-olefin copolymer is not particularly limited, and is practically not more than 30% by mass. When the α-olefin content is not more than 30% by mass, the propylene-α-olefin copolymer tends to hardly suffer from excessive reduction in crystallizability, so that there tends to hardly occur such a problem that the raw material pellets readily suffer from blocking. On the other hand, the content of the propylene component in the propylene-α-olefin copolymer is usually not less than 50% by mass, preferably 70 to 99% by mass and more preferably 75 to 97% by mass.

In addition, in order to design the propylene-α-olefin copolymer so as to have a crystallization peak temperature (Tc) that is controlled to a high-temperature side (i.e., Tc is not lower than 70°C) despite a low heat of crystallization (ΔHc) thereof (ΔHc is less than 10 J/g), the propylene component and the α-olefin component are preferably polymerized such that the resulting polymer commonly has both of a random orientation and a block orientation. When suitably controlling a proportion between the random orientation and the block orientation in the polymer, even if the ethylene content in the polymer lies within the above-specified range, it is possible to obtain the propylene-based copolymer (B) having a low heat of crystallization without causing an extreme reduction in Tc.

The method of producing the propylene-based resin (B) is not particularly limited and may be a known polymerization method using a known catalyst for polymerization of olefins. Examples of the known polymerization method include a slurry polymerization method, a solution polymerization method, a bulk polymerization method and a vapor phase polymerization method using a multi-site catalyst such as typically a Ziegler-Natta type catalyst and a single site catalyst such as typically a metallocene catalyst.

The MFR of the propylene-based resin (B) (as measured at 230°C under a load of 21.18 N according to JIS K 7210) is not particularly limited, and is usually not less than 0.2 g/10 min, preferably 0.5 to 18 g/10 min and more preferably 1 to 15 g/10 min. When the MFR of the propylene-based resin (B) is not less than 0.2 g/10 min, the obtained resin composition can exhibit a stable extrusion moldability. When the MFR of the propylene-based resin (B) is not more than 20 g/10 min, the resin composition can be stably formed into a film upon molding, and the resulting film is free from unevenness in thickness and deterioration or variation in mechanical strength, etc.

As the above propylene-based copolymer (B), there may be mentioned, for example, a soft polypropylene "VERSIFY" (tradename) produced by The Dow Chemical Co.

In the present invention, the heat of crystallization (ΔHc) of the intermediate layer is 10 to 60 J/g or less. When the heat of crystallization (ΔHc) of the intermediate layer is less than 10 J/g, the resin composition for the intermediate layer tends to have a poor film-forming property owing to an excessively low crystallizability thereof, and the resulting film tends to become excessively soft or tends to be insufficient in strength when used at an ordinary temperature, thereby causing problems upon practical use. On the other hand, when the heat of crystallization (ΔHc) of the intermediate layer is more than 60 J/g, the resulting film tends to require a large force upon elongation and stretch thereof and exhibit only a non-uniform elongation, and therefore tends to be unsuitable as a stretch film. The method of controlling the heat of crystallization (ΔHc) of the intermediate layer to the desired range is not particularly limited, and there may be suitably used the method of mixing the propylene-based resin (B) with the other kind of resin. Among them, there is preferably used the method of mixing the propylene-based resin (B) with the below-mentioned propylene-based resin (C) from the standpoint of imparting various good properties as a suitability for packaging machines (such as a cutting property, a resistance to occurrence of wrinkles upon packaging, a bottom overwrapping stability, a tearing property and a transparency after packaging).

The heat of crystallization (ΔHc) of the propylene-based resin (C) used in the film according to the present invention as measured at a temperature drop rate of 10°C/min using a differential scanning calorimeter (DSC) is larger than the heat of crystallization (ΔHc) of the propylene-based resin (B). Examples of such a propylene-based resin (C) include a homopolymer of propylene, and a random copolymer or a block copolymer of propylene and the "other monomer copolymerizable with propylene".

When compounding such a propylene-based resin (C) in the intermediate layer of the film, the resulting film can be enhanced in various properties as a packaging suitability such as a bottom overwrapping property and a cutting property. In addition, the raw material resin pellets can be enhanced in storage stability, and the resin composition constituting the intermediate layer can be enhanced in strength and heat resistance.

Examples of the other monomer copolymerizable with propylene include α-olefins having 4 to 20 carbon atoms such as ethylene, 1-butene, 1-hexene, 4-methyl pentene-1 and 1-octene; and dienes such as divinyl benzene, 1,4-cyclohexadiene, dicyclopentadiene, cyclooctadiene and ethylidene norbornene. Two or more of these monomers may be copolymerized with propylene.

From the standpoint of imparting a necessary adequate flexibility to the stretch film, one copolymer or two or more copolymers selected from the group consisting of a propylene-ethylene random copolymer, a propylene-ethylene-butene-1 copolymer and a reactor-type polypropylene-based elastomer are preferably used as the propylene-based copolymer (C).

Meanwhile, the propylene-based resin (C) having a heat of crystallization (ΔHc) of not less than 30 J/g as measured at a temperature drop rate of 10°C/min using a differential scanning calorimeter (DSC) can maintain good strength and heat sealing property.

The heat of crystallization (ΔHc) of the propylene-based resin (C) may vary depending upon a molecular weight, an ethylene content (copolymerization ratio), a random degree (dispersibility of an ethylene component in the copolymer) or a stereo regularity of the propylene-based resin (C). In general, there is such a tendency that the larger the heat of crystallization becomes, the higher the peak temperature increases, so that the resin having a large heat of crystallization is generally considered to be excellent in heat resistance. From such a viewpoint, the heat of crystallization (ΔHc) of the propylene-based resin (C) is preferably not less than 30 J/g, more preferably not less than 40 J/g and especially preferably not less than 50 J/g. The upper limit of the heat of crystallization (ΔHc) of the propylene-based resin (C) is not particularly limited, and is practically not more than 150 J/g.

The MFR of the propylene-based resin (C) (as measured at 230°C under a load of 21.18 N according to JIS K 7210) is not particularly limited, and is usually not less than 0.2 g/10 min, preferably 0.5 to 18 g/10 min and more preferably 1 to 15 g/10 min. When the MFR of the propylene-based resin (C)is not less than 0.2 g/10 min, the obtained resin composition can exhibit a stable extrusion moldability. When the MFR of the propylene-based resin (C)is not more than 20 g/10 min, the resin composition can be stably formed into a film upon molding, and the resulting film is free from unevenness in thickness and deterioration or variation in mechanical strength, etc.

Examples of the above propylene-based resin (C) include "NOVATEC PP" and "WINTEC" (tradenames) both produced by Japan Polypropylene Corp., "NOBLEN" produced by Sumitomo Chemical Co., Ltd., and "PRIME POLYPRO" and "PRIME TPO" (tradenames) both produced by Prime Polymer Co., Ltd.

In the resin composition constituting the intermediate layer, the content ratio between the propylene-based resin (B) and the propylene-based resin (C) is controlled such that a mass ratio therebetween [(B)/(C)] is usually 20 to 80/80 to 20, preferably 30 to 70/70 to 30 and more preferably 40 to 60/60 to 40. When the content of the propylene-based resin (B) is increased to be more than the above-specified range, the obtained resin composition tends to be excessively soft, so that the resulting film tends to be deteriorated in cutting property and heat resistance. On the other hand, when the content of the propylene-based resin (C) is excessively increased, the resulting film tends to occasionally fail to ensure properties required for a stretch packaging film such as packaging workability, packaging finish, elastic recovery property, bottom sealing property and transparency.

The resin composition constituting the intermediate layer may also contain a specific resin as a component (D), other than the component (B) and the component (C). Examples of the resin (D) include one resin or two or more resins selected from the group consisting of a petroleum resin, a terpene resin, a chroman-indene resin, a rosin-based resin and a hydrogenated derivative thereof (these resins are hereinafter totally referred to as a "petroleum-based resin"). The use of such a resin (D) is effective to further improve a packaging suitability of the film such as stiffness, cutting property and bottom overwrapping stability as well as transparency.

Examples of the petroleum resin include alicyclic petroleum resins obtained from cyclopentadiene or a dimer thereof, aromatic petroleum resins obtained from C9 components, and petroleum resins of a copolymer type obtained from the alicyclic and aromatic petroleum resins.

Examples of the terpene resin include terpene resins obtained from β-pinene and terpene-phenol resins.

Examples of the chroman-indene resin include thermoplastic synthetic resins produced by polymerizing a C8 chroman and a C9 indene as main monomers which are obtained by purifying a fraction distilled off from a tar at a temperature of 160 to 180°C, or the like.

Examples of the rosin-based resin include rosin resins such as gum rosins and wood rosins, and esterified rosin resins which are obtained by modifying rosins with glycerol, pentaerythritol, etc.

As the above petroleum-based resins, from the viewpoints of good color tone, thermal stability and compatibility, there are preferably used the hydrogenated derivatives. In addition, the above petroleum-based resins have various softening temperatures mainly owing to the difference in molecular weight therebetween. The softening temperature of the petroleum-based resins is usually 100 to 150°C and preferably 110 to 140°C.

Specific examples of the petroleum-based resins include commercially available products such as "HI-LET" and "PETROSIN" (tradenames) both produced by Mitsui Chemicals Inc., "ALCON" (tradename) produced by Arakawa Chemical Industries, Ltd., "CLEARON" (tradename) produced by Yasuhara Chemical Co., Ltd., "I-MARV" (tradename) produced by Idemitsu Petrochemical Corp., and "ESCORETTE" (tradename) produced by Eastman Chemical Co., Ltd.

The content of the resin (D) in the resin composition constituting the intermediate layer is usually 1 to 40% by mass. When the content of the resin (D) in the resin composition is not less than 1% by mass, the resulting film can be imparted with properties required for a stretch film such as a cutting property and a bottom overwrapping stability. The content of the resin (D) in the resin composition is preferably not less than 5% by mass and more preferably not less than 10% by mass. On the other hand, when the content of the resin (C) in the resin composition is not more than 40% by mass, the resulting film is free from deterioration in low-temperature suitability required for a stretch film due to increase in glass transition temperature thereof, and can also be prevented from suffering from occurrence of blocking owing to bleeding of low-molecular compounds therefrom. The content of the resin (D) in the resin composition is preferably not more than 35% by mass and more preferably not more than 30% by mass.

The resin composition constituting the intermediate layer also contains an ethylene-based resin as a component (E), other than the component (B), the component (C) and the component (D).

The ethylene-based resin (E) may be the same polyethylene-based resin as the ethylene-based resin (A) constituting a surface layer of the film or different from the ethylene-based resin (A), and is preferably the same ethylene-based resin. When the ethylene-based resin (E) is the same ethylene-based polymer as the ethylene-based resin (A) constituting a surface layer of the film, it is possible to enhance adhesion between the intermediate layer and the surface layers and mechanical properties of the film as a whole. In addition, for example, trimming loss of the film which occurs upon cutting and trimming both edges of the film as formed can be well improved by adding the trimmed film edges to constituting raw materials of the intermediate layer for reuse thereof. Thus, it is possible to prevent waste of raw materials and thereby reduce costs for the raw materials.

The most suitable ethylene-based resin (E) is an ethylene-vinyl acetate copolymer having a vinyl acetate unit content of 5 to 25% by mass and an MFR of 0.2 to 10 g/10 min (as measured at 190°C under a load of 21.18 N according to JIS K 7210). The MFR of the ethylene-vinyl acetate copolymer is preferably 0.5 to 8 g/10 min and more preferably 1 to 6 g/10 min. When the vinyl acetate unit content in the ethylene-vinyl acetate copolymer as the ethylene-based resin (E) is not less than 5% by mass, the resulting film is soft, and not only can maintain a flexibility and an elastic recovery property, but also can impart a good surface adhesion property to the film when the ethylene-based resin (E) is also used in a surface layer of the film. On the other hand, when the vinyl acetate unit content in the ethylene-vinyl acetate copolymer as the ethylene-based resin (E) is not more than 25% by mass, for example, even though the ethylene-based resin (E) is used in a surface layer of the film, the resulting film can be prevented from exhibiting an excessively high surface adhesion property, and therefore can maintain a good winding property and a good appearance. In addition, when the MFR of the ethylene-vinyl acetate copolymer as the ethylene-based resin (E) is not less than 0.2 g/10 min, the resulting resin composition can maintain a good extrusion moldability. On the other hand, when the MFR of the ethylene-vinyl acetate copolymer as the ethylene-based resin (E) is not more than 10 g/10 min, the resulting resin composition can maintain a good film-forming stability, so that it is possible to suppress unevenness in thickness and variation in mechanical strength of the resulting film, etc.

The content of the ethylene-based resin (E) in the resin composition constituting the intermediate layer is usually 1 to 40% by mass. When the content of the ethylene-based resin (E) in the resin composition constituting the intermediate layer is not less than 1% by mass, the resulting film can exhibit a sufficient low-temperature suitability required for a stretch film. The content of the ethylene-based resin (E) in the resin composition constituting the intermediate layer is more preferably not less than 5% by mass, and still more preferably not less than 10% by mass. On the other hand, when the content of the ethylene-based resin (E) in the resin composition constituting the intermediate layer is not more than 40% by mass, the resulting film can exhibit a sufficient bottom overwrapping property and a sufficient heat resistance. The content of the ethylene-based resin (E) in the resin composition constituting the intermediate layer is more preferably not more than 35% by mass and still more preferably not more than 30% by mass.

The surface layers and/or the intermediate layer of the film according to the present invention may be appropriately compounded with various additives for imparting an anti-fogging property, an antistatic property, a slip property, an adhesion property, etc., to the resulting film. Examples of the various additives include aliphatic alcohol-based fatty acid esters as a compound obtained from a fatty acid alcohol usually having 1 to 12 carbon atoms and preferably 1 to 6 carbon atoms and a fatty acid usually having 0 to 22 carbon atoms and preferably 12 to 18 carbon atoms. Specific examples of the aliphatic alcohol-based fatty acid esters include monoglycerin oleate, polyglycerin oleate, glycerin triricinolate, glycerin acetyl ricinolate, polyglycerin stearate, glycerin laurate, polyglycerin laurate, methyl acetyl ricinolate, ethyl acetyl ricinolate, butyl acetyl ricinolate, propylene glycol oleate, propylene glycol laurate, pentaerythritol oleate, polyethylene glycol oleate, polypropylene glycol oleate, sorbitan oleate, sorbitan laurate, polyethylene glycol sorbitan oleate and polyethylene glycol sorbitan laurate; polyalkyl ether polyols, more specifically, such as polyethylene glycol and polypropylene glycol; and paraffin-based oils. These compounds may be used in combination of any two or more thereof. When containing these additives in an X layer, these additives may be suitably used in an amount of usually 0.1 to 12 parts by mass and preferably 1 to 8 parts by mass based on 100 parts by mass of the resin component constituting the layer X.

The film according to the present invention comprises the opposite surface layers each formed of the ethylene-based resin (A) and the intermediate layer formed of the resin composition comprising the specific propylene-based resin (B) and the specific propylene-based resin (C) as main components. The film of the present invention may be in the form of a laminated film comprising such three layers, but may further comprise the other layer (hereinafter occasionally referred to as a "P layer"), if required, unless the merits of the present invention are adversely affected, in order to improve mechanical properties or adhesion between the respective layers. The same layer as the surface layer (hereinafter occasionally referred to as an "S layer") may be provided, not only as the opposite surface layers, but also as the other layer, i.e., as a layer in the intermediate layer. The intermediate layer (hereinafter occasionally referred to as an "M layer") may be at least one layer formed between the opposite surface layers, and may also be in the form of a laminate having two or more layers. Typical examples of a layer structure of the film according to the present invention include a three layer structure constituted of (S layer)/(M layer)/(S layer), a four layer structure constituted of (S layer)/(Player)/(M layer)/(S layer) and a five layer structure constituted of (S layer)/(M layer)/(P layer)/(M layer)/(S layer). In these cases, the resin compositions and thickness ratios of the respective layers may be the same or different from each other.

In the film according to the present invention, the thicknesses of the surface layers and intermediate layer may be controlled to such a suitable range that the proportion of the thickness of the front and rear surface layers is 10 to 65% whereas the proportion of the thickness of the intermediate layer is 35 to 90%. When the thickness ratios of the film lie within the above-specified range, it is possible to attain a stable film-forming property and impart a good surface adhesion property to the resulting stretch film.

Further, from the viewpoints of a stable film-forming property, a surface adhesion property and various properties required for a stretch packaging film as well as a good economy, it is preferred that the proportion of the thickness of the front and rear surface layers is 20 to 60% whereas the proportion of the thickness of the intermediate layer is 80 to 40%.

The thickness of the film according to the present invention may be in such a range as ordinarily used for a stretch packaging film, more specifically, may be in the range of usually about 8 to about 30 *µ*m and preferably about 9 to about 20 *µ*m.

The film according to the present invention may be produced, for example, by melting and extruding a raw material from an extruder, and subjecting the thus extruded material to inflation molding step or T-die molding step to form the material into a film shape.

When it is intended to produce the film having a laminated structure, there is preferably used a co-extrusion method in which the raw materials are extruded through a multi-layer die using a plurality of extruders. In practice, respective resin materials are preferably melted and extruded from a ring die and then subjected to inflation molding step. In this case, the blow-up ratio (i.e., a ratio of a diameter of a molded tube to a pore diameter of a die) is usually not less than 3 and preferably in the range of 4 to 7. In this case, as a cooling method, there may by used the method of cooling the molded tube either from an outside of the tube or from both inside and outside of the tube.

Further, the resulting film may be heated to a temperature not higher than a crystallization temperature of the resin used therein and then may be drawn in a longitudinal direction thereof at a draw ratio of about 1.2 to about 5 times or in a biaxial direction of the film, i.e., both longitudinal and lateral directions thereof at a draw ratio of about 1.2 to about 5 times by utilizing a difference in rotating speed between nip rolls, whereby the resulting film can be improved in cutting property and can be imparted with a heat contraction property, etc.

The storage elastic modulus (E') at 20°C of the stretch film (laminate) according to the present invention is in the range of 100 MPa to 1 GPa as measured at an oscillation frequency of 10 Hz and a distortion of 0.1% by a dynamic viscoelasticity measuring method as prescribed in Method A of JIS K 7198. When the film is used in the form of a soft film, the value of an elastic modulus thereof as measured near room temperature may be used as an index. When the storage elastic modulus (E') at 20°C is not less than 100 MPa, it is possible to prevent occurrence of drawbacks such as poor workability owing to adhesion between the films at room temperature. On the other hand, when the storage elastic modulus (E') at 20°C is not more than 1 GPa, the resulting film is prevented from exhibiting excessively high hardness and has an adequate elongation, and therefore can be advantageously used in the applications of soft films.

The flexibility of the film according to the present invention may be controlled such that the tensile stress at 100% elongation in a width direction of the film is usually in the range of 40 to 140 kgf/cm² and preferably 50 to 130 kgf/cm² as measured by subjecting the film to a tensile test at a temperature of 20°C and a pulling speed of 200 mm/min according to JIS Z 1702.

The "stretch packaging film" as used in the present invention is intended to mean a wide range of packaging films having an elongation and a self-adhesion property. Typical examples of the stretch packaging film include packaging films for prepackaging to overwrap fruits, meats or prepared food placed on lightweight trays, or packaging films for overwrapping to fix luggage upon transportation thereof.

The "main component" as used in the present invention is intended to mean that the other components may also be contained in such an amount that the effects of the main component are not adversely influenced by addition thereof, unless otherwise specified. In this case, the content of the main component (a total content of two or more components when the two or more components are included in the main component)is not particularly limited. However, the content of the main component in the resulting composition is usually not less than 50% by mass, preferably not less than 70% by mass and still more preferably not less than 90% by mass (inclusive of 100%) based on the composition.

In addition, on the basis of the definitions of JIS, the "sheet" as used herein generally means a flat product having a comparatively small thickness relative to a length and a width of the product, whereas the "film" as used herein generally means a thin flat product having an extremely small thickness relative to a length and a width of the product, and a maximum thickness that is defined as an optional value, which is usually supplied in the form of a roll (refer to Japan Industrial Standards JIS K 6900). For example, with respect to the thickness, in a narrow sense, the sheet is a product having a thickness of not less than 100 *µ*m, whereas the film is a product having a thickness of less than 100 *µ*m. However, there is no clear boundary between the sheet and film. In the present invention, it is not necessary that the sheet and film are literally distinguished from each other. Therefore, in the present invention, it should be understood that even through the product is referred to as the "film", the product also comprises the "sheet", and on the contrary, even through the product is referred to as the "sheet", the product also comprises the "film".

### EXAMPLES

The present invention is described in more detail by Examples below. However, the following Examples are only illustrative and not intended to limit the present invention thereto. Meanwhile, various measurements and evaluations of films and materials therefor as described in the present specification were conducted as follows. In the following descriptions, the flow direction of a film from an extruder is referred to as a "longitudinal direction", whereas the direction perpendicular to the flow direction is referred to as a "lateral direction".

### (1) Crystallization peak temperature (Tc) and heat of crystallization (ΔHc):

Using "DSC-7" manufactured by Perkin-Elmer Corp., a sample to be measured was heated to 200°C at a temperature rise rate of 10°C/min, held at 200°C for 1 min, and then cooled at a temperature drop rate of 10°C/min according to JIS K 7121 and JIS K 7122 to prepare a crystallization curve of the sample. From the thus prepared crystallization curve, it was determined whether or not a peak of the crystallization temperature is single, and the heat of crystallization (ΔHc) and crystallization peak temperature (Tc) of the sample were also determined.

### (2) Storage elastic modulus (E'):

According to a dynamic viscoelasticity measuring method described in a method A of JIS K 7198, using a dynamic viscoelasticity analyzer "DVA-200 Model" manufactured by I.T. Keisoku Seigyo Co., Ltd., the dynamic viscoelasticity of a film was measured in a lateral direction (TD) thereof at an oscillation frequency of 10 Hz and a distortion of 0.1% while the temperature therein was raised at a rate of 1°C/min from -50°C to 150°C to obtain measurement data. The storage elastic modulus (E') at 20°C of the film was determined from the thus obtained data.

### (3) Flexibility:

A tensile test was carried out at 20°C at a pulling speed of 200 mm/min according to JIS Z 1702 to measure a tensile stress (kgf/cm²) at 100% elongation in a width direction of the film. The flexibility of the film was evaluated from the thus measured tensile stress according to the following ratings.
A: The tensile stress value (kgf/cm²) was not less than 50 and less than 80;
B: The tensile stress value (kgf/cm²) was not less than 40 and less than 50, or not less than 80 and less than 90;
C: The tensile stress value (kgf/cm²) was not less than 20 and less than 40, or not less than 90 and less than 140;
D: The tensile stress value (kgf/cm²) was less than 20 or not less than 140.

### (4) Suitability for packaging machines:

Using an automatic packaging machine "ISHIDA W-mini UNI" manufactured by Ishida Co., Ltd., a foamed polystyrene tray (length: 280 mm; width: 240 mm; height: 30 mm) having a largest width in the existing Standards was wrapped with the film (width: 350 mm) to evaluate a cutting property, a resistance to occurrence of wrinkles upon packaging, a bottom overwrapping stability, a tearing property and a transparency after packaging according to the ratings shown in Table 1 to thereby determine a suitability for packaging machines of the film.

**Table 1**

| [Evaluation items] |
|---|
| Cutting property: |
| A: Cuttable without any problems; |
| B: Slightly poor cut surface, but still free of problems; |
| C: Hardly cuttable, and problems occurred upon transportation; and |
| D: Not cut at all. |

| Occurrence of wrinkles upon packaqinq: |
|---|
| A: No wrinkles occurred under normal conditions; |
| B: Few wrinkles occurred, but still free of problems; |
| C: Wrinkles occurred over not less than 30% of an area of the film, and were not removable by any effort; and |
| D: Wrinkles occurred over an almost entire area of the film. |

| Bottom overwrapping stability: |
|---|
| A: Neatly overwrapped without any stiffness and peel; |
| B: Almost properly overwrapped; |
| C: Slightly peeled off; and |
| D: Bottom overwrapping portion of the film was hardly overlapped and was formed into a dumpling, resulting in failure to overwrap the bottom. |

| Tearing property: |
|---|
| A: No torn film pieces occurred even after continuously producing 500 packs with the film; |
| B: Less than 5 torn film pieces occurred after |
| continuously producing 500 packs with the film; |
| C: Not less than 5 torn film pieces occurred after continuously producing 500 packs with the film; and |
| D: Not less than 30 torn film pieces occurred after continuously producing 500 packs with the film. |
| Transparency after packaging: |
| A: Hardly whitened; |
| B: Slightly whitened, but still free of problems; |
| C: Slightly whitened; and |
| D: Some whitened portions were noticeable, and defects occurred. |

### (5) Low-temperature suitability:

A wet towel having a weight of 400 g as a dummy food was placed in a foamed polystyrene tray (length: 250 mm; width: 180 mm; height: 25 mm), and manually wrapped with the film obtained in respective Examples and Comparative Examples using a hand wrapper to prepare 10 packages. The thus prepared 10 packages as samples were packed in a corrugated board casing (length: 315 mm; width: 380 mm; height: 165 mm) such that the five packages were stacked on one another and the 10 packages were therefore arranged in two rows as a whole. The thus packed corrugated board casing was stored at -25°C for 24 hr to freeze the packages. After completion of the freezing, the corrugated board casing with the packages was dropped from a height of 1 m to a ground, and then unpacked to examine the condition of the respective packages (including looseness of top surface, tearing (cracking) of the film, etc.).
A: No defects occurred;
B: Slight looseness of the top surface occurred, but no tearing of the film occurred;
C: Lowermost one of the stacked packages suffered from tearing of the film; and
D: Any of the stacked packages suffered from tearing of the film.

### Example 1 (not in accordance with the present invention) :

The resin composition for forming opposite suface layers was prepared as follows. That is, 97 parts by mass of EVA as an ethylene-based resin (component (A)) (vinyl acetate content: 15% by mass; heat of crystallization: 76.2 J/g; crystallization peak temperature: 76.7°C; MFR (as measured at 190°C under a load of 21.18 N according to JIS K 7210): 2.0 g/10 min) and 3 parts by mass of diglycerin oleate as an additive (anti-fogging agent) were melted and kneaded with each other.

On the other hand, the resin composition for forming an intermediate layer was prepared as follows. That is, a propylene-based resin as a component (B) (crystallization peak: single; heat of crystallization: 8.9 J/g; crystallization peak temperature: 100.0°C; MFR (as measured at 230°C under a load of 21.18 N according to JIS K 7210): 2 g/10 min) and a propylene-based resin as a component (C) (propylene-ethylene random copolymer; crystallization peak: single; heat of crystallization: 75.8 J/g; crystallization peak temperature: 115.9°C; MFR (as measured at 230°C under a load of 21.18 N according to JIS K 7210): 3 g/10 min) were melted and kneaded at a mass ratio (B)/(C) of 54/46. The thus obtained molten mixed resin was subjected to co-extrusion inflation molding step using a three-layer ring die heated to 190°C at a blow-up ratio of 5.0 to thereby obtain a three-layer laminated film having a total thickness of 12 *µ*m (2 *µ*m/8 *µ*m/2 *µ*m). The evaluation results are shown in Table 2 below.

### Example 2 (not in accordance with the present invention):

The same procedure as in Example 1 was conducted except that in addition to the components (B) and (C) in the resin composition for forming the intermediate layer, a hydrogenated petroleum resin ("ALCON P125" produced by Arakawa Chemical Industries, Ltd.; softening temperature: 125°C) as a component (D) was further mixed therein at a mass ratio (B)/(C)/(D) of 43/37/20, thereby obtaining a three-layer laminated film having a thickness of 12 *µ*m. The evaluation results are shown in Table 2 below.

### Example 3:

The same procedure as in Example 2 was conducted except that in addition to the components (B), (C) and (D) in the resin composition for forming the intermediate layer, EVA as a component (E) (vinyl acetate content: 15% by mass; heat of crystallization: 76.2 J/g; crystallization peak temperature: 76.7°C; MFR (as measured at 190°C under a load of 21.18 N according to JIS K 7210): 2.0 g/10 min) was further mixed therein at a mass ratio (B)/(C)/(D)/(E) of 34/30/16/20, thereby obtaining a three-layer laminated film having a total thickness of 12 *µ*m (2 *µ*m/8 *µ*m/2 *µ*m). The evaluation results are shown in Table 2 below.

### Comparative Example 1:

The same procedure as in Example 1 was conducted except that the resin composition for forming the intermediate layer was replaced with 100% by mass of the component (B) used in Example 1, thereby obtaining a three-layer laminated film having a thickness of 12 *µ*m. The evaluation results are shown in Table 2 below.

### Comparative Example 2:

The same procedure as in Example 1 was conducted except that the resin composition for forming the intermediate layer was replaced with 100% by mass of the component (C) used in Example 1, thereby obtaining a three-layer laminated film having a thickness of 12 *µ*m. The evaluation results are shown in Table 2 below.

### Comparative Example 3:

The same procedure as in Example 1 was conducted except that the component (B) used in Example 1 was replaced with a propylene-based copolymer (P-1) (heat of crystallization: 20.6 J/g; crystallization peak: single; crystallization peak temperature: 57.6°C; MFR (as measured at 230°C under a load of 21.18 N according to JIS K 7210): 2.0 g/10 min) such that a mass ratio (P-1)/(C) was 54/46, thereby obtaining a three-layer laminated film having a thickness of 12 *µ*m. The evaluation results are shown in Table 2 below.

### Comparative Example 4:

The same procedure as in Example 1 was conducted except that the component (B) used in Example 1 was replaced with a propylene-based copolymer (P-2) (heat of crystallization: 13.2 J/g; crystallization peak: double; crystallization peak temperatures: 77.2°C and 104.9°C; MFR (as measured at 230°C under a load of 21.18 N according to JIS K 7210): 1.5 g/10 min) such that a mass ratio (P-2)/(C) was 54/46, thereby obtaining a three-layer laminated film having a thickness of 12 *µ*m. The evaluation results are shown in Table 2 below.

### Comparative Example 5:

The same procedure as in Example 1 was conducted except that the component (B) used in Example 1 was replaced with a propylene-based copolymer (P-3) (heat of crystallization: 7.0 J/g; crystallization peak: single; crystallization peak temperature: 21.5°C; MFR (as measured at 230°C under a load of 21.18 N according to JIS K 7210): 2.0 g/10 min) such that a mass ratio (P-3)/(C) was 54/46, thereby obtaining a three-layer laminated film having a thickness of 12 *µ*m. The evaluation results are shown in Table 2 below.

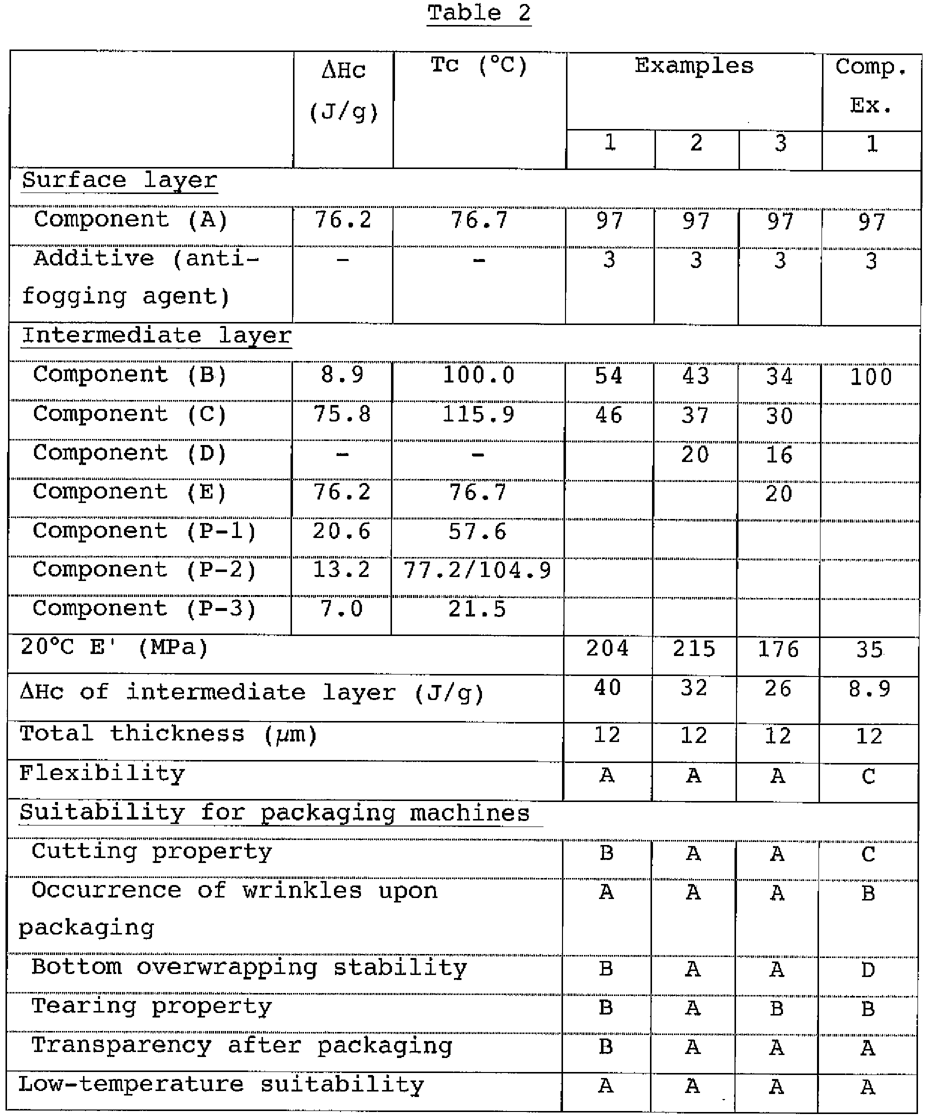

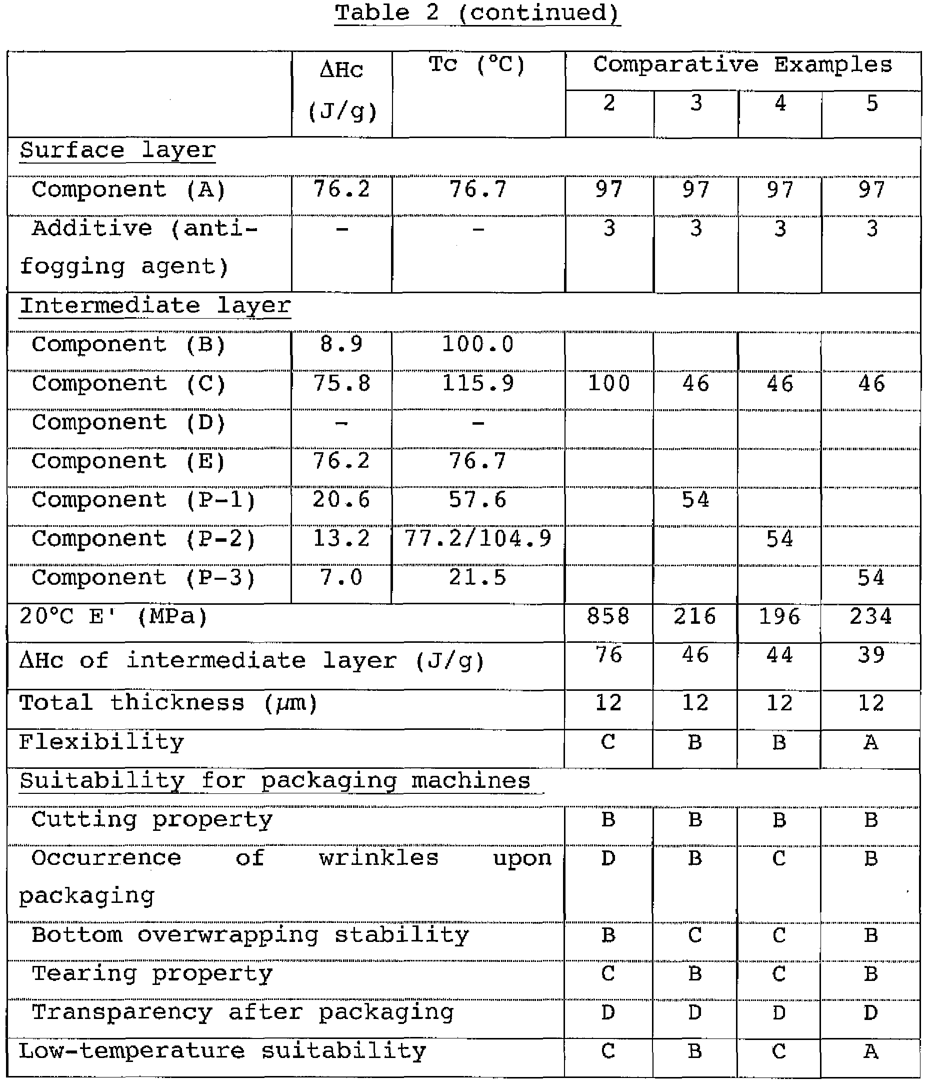

From the results shown in Table 2, it was recognized that the films obtained in Examples 1 to 3 had a good transparency after packaging when overwrapping a large tray using an automatic packaging machine, and also exhibited good results concerning any of a suitability for packaging machines, a flexibility and a low-temperature suitability. Further, the films were also excellent in a flexibility, a suitability for packaging machines and a low-temperature suitability.

On the other hand, in Comparative Example 1 in which the storage elastic modulus (E') of the film was out of the range as defined in the present invention, it was recognized that the film became excessively soft and therefore failed to exhibit a good bottom overwrapping stability. In Comparative Example 2 in which the heat of crystallization (ΔHc) of the film was larger than the value as defined in the present invention, it was recognized that the film was not only deteriorated in transparency after packaging, but also suffered from occurrence of wrinkles upon packaging. In Comparative Example 3 and Comparative Example 5 in which the storage elastic modulus (E') and the heat of crystallization (ΔHc) of the film were fallen in a suitable ranges but the crystallization peak temperature (Tc) of the film was out of the range as defined in the present invention, the film was deteriorated in transparency after packaging. In Comparative Example 4 in which the resin having double crystallization peaks was used, the film was deteriorated in transparency after packaging.

### INDUSTRIAL APPLICABILITY

The film according to the present invention can be suitably used as a stretch packaging film.

## Claims

1. A stretch packaging film comprising a laminated film having at least three layers,
which laminated film comprises:
opposite surface layers each comprising an ethylene-based resin (A) as a main component, and
an intermediate layer comprising as main components a propylene-based resin (B) which satisfies the following conditions (1) and (2), and a propylene-based resin (C) which satisfies the following condition (3),
wherein the intermediate layer further comprises an ethylene-based resin (E) in an amount of 1 to 40 % by mass, and has a heat of crystallization (ΔHc) of 10 to 60 J/g as measured at a temperature drop rate of 10°C/min using a differential scanning calorimeter (DSC) and
which laminated film has a storage elastic modulus (E') at 20°C of 100 MPa to 1 GPa as measured with respect to the laminated film at an oscillation frequency of 10 Hz and a distortion of 0.1% by a dynamic viscoelasticity measuring method:
Condition (1): that a single peak is observed in a crystallization curve of the propylene-based resin (B) as measured at a temperature drop rate of 10°C/min using a differential scanning calorimeter (DSC);
Condition (2): that a crystallization peak temperature (Tc) and a heat of crystallization (ΔHc) of the propylene-based resin (B) as observed in the crystallization curve defined in the above (1) are not lower than 70°C and not more than 10 J/g, respectively; and
Condition (3): that a heat of crystallization (ΔHc) of the propylene-based resin (C) as measured at a temperature drop rate of 10°C/min using a differential scanning calorimeter (DSC) is larger than the heat of crystallization (ΔHc) of the propylene-based resin (B).

2. The stretch packaging film according to 1, wherein the ethylene-based resin (A) comprises one component or two or more components selected from the group consisting of a low-density polyethylene, a linear low-density polyethylene, a linear ultra-low-density polyethylene, an ethylene-vinyl acetate copolymer, an ethylene-acrylic ester copolymer, an ethylene-methacrylic ester copolymer and an ionomer resin.

3. The stretch packaging film according to claim 2, wherein the ethylene-vinyl acetate copolymer has a vinyl acetate unit content of 5 to 25% by mass and a melt flow rate (MFR) of 0.2 to 10 g/10 min (as measured at 190°C under a load of 21.18 N according to JIS K 7210).

4. The stretch packaging film according to any one of claims 1 to 3, wherein the propylene-based resin (C) comprises one component or two or more components selected from the group consisting of a homopolypropylene, a propylene-ethylene copolymer, a propylene-ethylene-butene-1 copolymer and a reactor-type polypropylene-based elastomer.

5. The stretch packaging film according to any one of claims 1 to 4, wherein the intermediate layer further comprises a component (D) comprising at least one resin selected from the group consisting of a petroleum resin, a terpene resin, a chroman-indene resin, a rosin-based resin and hydrogenated derivatives of these resins in an amount of 1 to 40% by mass.

## Patentansprüche

1. Stretch-Verpackungsfolie, umfassend eine laminierte Folie mit mindestens drei Schichten,
wobei die laminierte Folie umfasst:
sich gegenüberliegende Oberflächenschichten, umfassend ein Ethylen-basiertes Harz (A) als eine Hauptkomponente, und
eine Zwischenschicht, umfassend als Hauptkomponenten ein Propylen-basiertes Harz (B), welches die folgenden Bedingungen (1) und (2) erfüllt, und ein Propylen-basiertes Harz (C), das die folgende Bedingung (3) erfüllt, wobei die Zwischenschicht weiterhin ein Ethylen-basiertes Harz (E) in einer Menge von 1 bis 40 Masse-% umfasst und eine Kristallisationswärme (ΔHc) von 10 bis 60 J/g aufweist, gemessen bei einer Temperaturabsenkungsrate von 10°C/min unter Verwendung eines Differenzial-Abtastkalorimeters (DSC), und
welche laminierte Folie einen Speicherelastizitätsmodul (E') bei 20°C von 100 MPa bis 1 GPa aufweist, gemessen mit Bezug auf die laminierte Folie bei einer Oszillationsfrequenz von 10 Hz und einer Distorsion von 0,1% durch eine dynamische Viskoelastizitäts-Messmethode;
Bedingung (1): dass ein Einzelpeak in einer Kristallisationskurve des Propylen-basierten Harzes (B) beobachtet wird, gemessen bei einer Temperaturabsenkungsrate von 10°C/min unter Verwendung eines Differenzial-Abtastkalorimeters (DSC);
Bedingung (2): dass eine Kristallisations-Peaktemperatur (Tc) und eine Kristallisationswärme (ΔHc) des Propylen-basierten Harzes (B), wie beobachtet in der Kirstallisationskurve wie oben in (1) definiert, nicht niedriger als 70°C bzw. nicht mehr als 10 J/g sind; und
Bedingung (3): dass eine Kristallisationswärme (ΔHc) des Propylen-basierten Harzes (C), gemessen bei einer Temperaturabsenkungsrate von 10°C/min unter Verwendung eines Differenzial-Abtastkolerimeters (DSC), größer ist als die Kristallisationswärme (ΔHc) des Propylen-basierten Harzes (B).

2. Stretch-Verpackungsfolie nach Anspruch 1, wobei das Ethylen-basierte Harz (A) eine Komponente oder zwei oder mehr Komponenten umfasst, gewählt aus der Gruppe, bestehend aus einem Polyethylen niedriger Dichte, einem linearen Polyethylen niedriger Dichte, einem linearen Polyethylen ultra-niedriger Dichte, einem Ethylen-VinylAcetat-Copolymer, einem Ethylen-Acrylsäureester-Copolymer, einem Ethylen-Methacrylsäureester-Copolymer und einem Ionomerharz.

3. Stretch-Verpackungsfolie nach Anspruch 2, wobei das Ethylen-Vinylacetat-Copolymer einen Gehalt an Vinylacetateinheiten von 5 bis 25 Masse-% und eine Schmelzfließrate (MFR) von 0,2 bis 10 g/10 min (gemessen bei 190°C unter einer Last von 21,18 N gemäß JIS K 7210) aufweist.

4. Stretch-Verpackungsfolie nach irgendeinem der Ansprüche 1 bis 3, wobei das Propylen-basierte Harz (C) eine Komponente oder zwei oder mehr Komponenten umfasst, gewählt aus der Gruppe, bestehend aus einem Homopolypropylen, einem Propylen-Ethylen-Copolymer, einem Propylen-Ethylen-Buten-1-Copolymer und einem Polypropylen-basierten Elastomer vom Reaktor-Typ.

5. Stretch-Verpackungsfolie nach irgendeinem der Ansprüche 1 bis 4, wobei die Zwischenschicht weiterhin eine Komponente (D) umfasst, umfassend mindestens ein Harz, gewählt aus der Gruppe, bestehend aus einem Erdölharz, einem Terpenharz, einem Chroman-Inden-Harz, einem Kolophonium-basierten Harz und hydrierten Derivaten dieser Harze in einer Menge von 1 bis 40 Masse-%.

## Revendications

1. Film d'emballage étirable comprenant un film stratifié comportant au moins trois couches,
lequel film stratifié comprend :
des couches de surface opposées comprenant chacune une résine à base d'éthylène (A) comme composant principal, et
une intercouche comprenant comme composants principaux une résine à base de propylène (B) qui satisfait les conditions suivantes (1) et (2), et une résine à base de propylène (C) qui satisfait la condition suivante (3),
dans lequel l'intercouche comprend en outre une résine à base d'éthylène (E) en une quantité de 1 à 40 % en masse, et a une chaleur de cristallisation (ΔHc) de 10 à 60 J/g telle que mesurée à un taux de refroidissement de 10 °C/min à l'aide d'un calorimètre à balayage différentiel (DSC) et
lequel film stratifié comporte un module élastique de stockage (E') à 20 °C de 100 MPa à 1 GPa mesuré par rapport au film stratifié à une fréquence d'oscillation de 10 Hz et une distorsion de 0,1 % par un procédé de mesure de viscoélasticité dynamique :
Condition (1) : qu'un seul pic soit observé dans une courbe de cristallisation de la résine à base de propylène (B) telle que mesurée à un taux de refroidissement de 10 °C/min à l'aide d'un calorimètre à balayage différentiel (DSC) ;
Condition (2) : qu'une température maximale de cristallisation (Tc) et une chaleur de cristallisation (ΔHc) de la résine à base de propylène (B) telles qu'observées dans la courbe de cristallisation définie ci-dessus (1) ne soient pas inférieures à 70 °C et pas supérieures à 10 J/g, respectivement ; et
Condition (3) : qu'une chaleur de cristallisation (ΔHc) de la résine à base de propylène (C) mesurée à un taux de refroidissement de 10 °C/min à l'aide d'un calorimètre à balayage différentiel (DSC) soit supérieure à la chaleur de cristallisation (ΔHc) de la résine à base de propylène (B).

2. Film d'emballage par étirage selon la revendication 1, dans lequel la résine à base d'éthylène (A) comprend un composant ou deux composants ou plus choisis dans le groupe constitué par un polyéthylène basse densité, un polyéthylène linéaire basse densité, un polyéthylène linéaire ultra-basse densité, un copolymère éthylène-acétate de vinyle, un copolymère éthylène-ester acrylique, un copolymère éthylène-ester méthacrylique et une résine ionomère.

3. Film d'emballage par étirage selon la revendication 2, dans lequel le copolymère d'éthylène-acétate de vinyle a une teneur en motifs acétate de vinyle de 5 à 25 % en masse et un indice de fluidité (MFR) de 0,2 à 10 g/10 min (tel que mesuré à 190 °C sous une charge de 21,18 N selon JIS K 7210).

4. Film d'emballage étirable selon l'une quelconque des revendications 1 à 3, dans lequel la résine à base de propylène (C) comprend un ou deux composants ou plus choisis dans le groupe constitué par un homopolypropylène, un copolymère propylène-éthylène, un copolymère propylène-éthylène-butène-1 et un élastomère à base de polypropylène de type réacteur.

5. Film d'emballage étirable selon l'une quelconque des revendications 1 à 4, dans lequel l'intercouche comprend en outre un composant (D) comprenant au moins une résine choisie dans le groupe constitué par une résine de pétrole, une résine de terpène, une résine de chromane-indène, une résine à base de colophane et les dérivés hydrogénés de ces résines en une quantité de 1 à 40 % en masse.
